# EUROPEAN PATENT APPLICATION

(11) **EP 2 832 271 A1**
(43) Date of publication of application: **04.02.2015**
(21) Application number: 13178750.9
(22) Date of filing: 31.07.2013
(51) Int. Cl.: A47J 31/40

(54) **Machine for making an infused drink**

(71) Applicant: Capitani S.r.l., 22070 Solbiate Comasco (CO) (IT)
(72) Inventor: Capitani, Gionata, I-22070 Solbiate, Como (IT)
(74) Representative: Eterno, Enrico

(57) **Abstract**

The present invention relates to a machine (1) for making infused and/or soluble drinks comprising a tank (2) for an infusion liquid, a pump (6) for moving such liquid from the tank (2) to dispensing zones (8, 10) passing through heating means (4), and deviator means (12, 14) for directing, in a selective manner, the infusion liquid towards a first (8) or towards a second (10) dispensing zone.

An infusion container (16) detachably connected to the first dispensing zone (8) is provided, comprising, in fluidic communication with each other a coupling portion (18, 20) for the reversible connection to the dispensing zone (8), a containment chamber (22) of the aromatic substance, in which the infusion takes place, and a dispensing aperture (24) of the infused drink.

## Description

The present invention relates to a machine for making and dispensing an infused drink. Specifically, the present invention relates to a machine able to produce a plurality of said drinks.

Generally speaking, teas or herb teas are made by preparing a quantity of hot water in a cup, which the bag containing the aromatic essence is placed in.

Machines for the infusion of coffee or the like are also known of, in which a predefined quantity of essence or powdered essence is contained in a suitable pod or capsule to be infused by means of a flow of hot water.

The aforesaid technical solutions are traditionally incompatible with each other, in that coffee machines have little versatility for preparing infused drinks such as tea, chamomile tea or the like, while conversely it is not customary to infuse coffee in a cup using a bag or filter.

The aim of the present invention is to provide a machine for dispensing a variety of infused and/or soluble drinks, suitable for being prepared from various possible essences or fragrances, simply and conveniently.

Such objective is achieved by a machine for making infused and/or soluble drinks according to claim 1. Further advantages may be achieved by means of the preferred characteristics of the dependent claims.

The present invention will now be described in detail, with the help of the attached drawings, wherein:

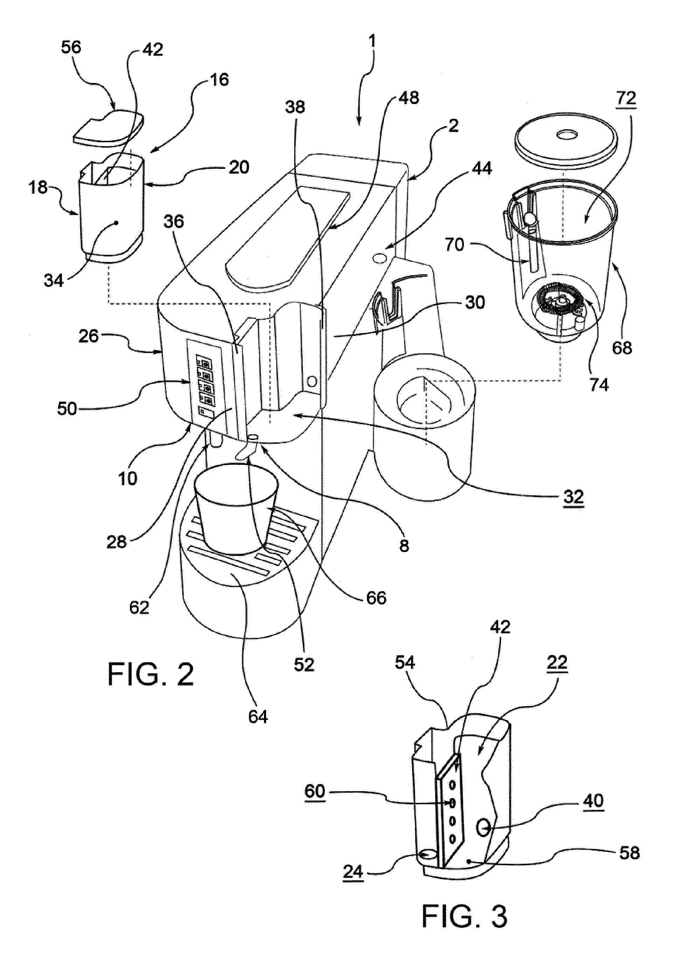

- figures 2 and 3 show two perspective views partially in cross-section, the second furthermore with separated parts, of a machine which the present invention relates to in a possible embodiment;

- figure 3 shows a cross-section view of the infusion container visible in figure 1 (fitted to the machine) and 2 (in an exploded view).

With reference to the aforesaid drawings, reference numeral 1 globally denotes a machine for the production of infused drinks according to the invention.

According to a preferred variant, such machine is suitable to dispense, from separate dispensing zones 8, 10, 44, at least three different types of drink; in particular, the first dispensing zones 8 may be used to make an infused drink such as tea or chamomile tea, the second zone 10 is used to make coffee while, where provided, the third zone 44 supplies a utility for the production of cappuccino.

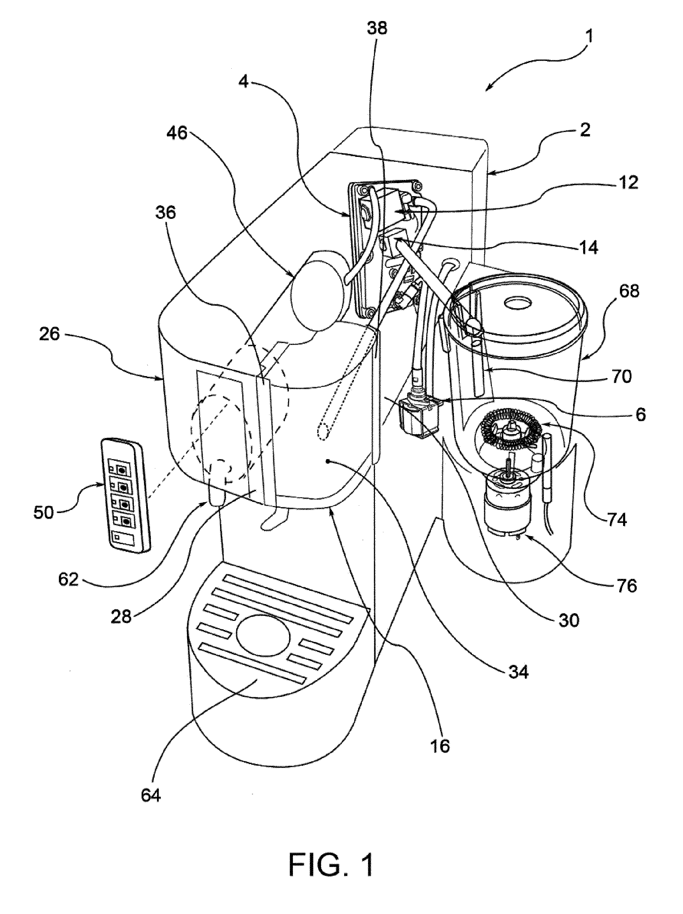

For example, according to the embodiment shown in figure 1, a beaker 68 may be connected in a releasable manner to the third dispensing zone 44, inside which a steam tube 70 is at least partially inserted for the transit of hot water and/or steam. Optionally, in an inner compartment 72 of the aforesaid beaker 68 a stirrer 74 could also be placed, to which a rotary movement is transmitted by a motor 76, by means of a magnetic or mechanical action.

Advantageously, the dispensing zones 8, 10, 44 are distributed around an outer casing 26 at a certain distance from each other, so as not to interfere with each other.

According to a preferred variant, an infusion group 46 is provided at the second dispensing zone 10 comprising a male infusor and a female infusor, at least one of which movable in relation to the other to open/close an infusion chamber. For example, the movable infusor (male or female) is movable by means of an actuation lever 48 rotatable in relation to the outer casing 26. According to a preferred embodiment, capsules or pods containing one or more aromatic substances to be infused are insertable in the aforesaid infusion chamber.

The machine 1 comprises at least one tank 2 suitable for containing an infusion liquid, such as water, milk or coffee, and heating means 4 of such liquid. According to the variation shown, the heating means 4 comprise an electrically operated heat exchanger.

A pump 6 is also provided for moving the infusion liquid from the tank 2 to at least the first 8 and to the second 10 dispensing zone passing through the heating means 4; this way, the liquid is pumped from the tank through the heating means to reach the dispensing zones at a higher temperature than that of storage in the tank, for example close to its specific boiling temperature.

Optionally, the machine 1 comprises control means 50 functionally connected to the pump 6 and/or to the heating means.

According to different embodiments, the control means 50 may be configured to activate the pump 6 in an intermittent manner, when the infusion liquid is directed to the first dispensing zone 8, so as to ensure a sufficient infusion time for the relative infused drink, and/or to control the heating means selectively depending on whether the infusion liquid is directed towards the first 8 or towards the second 10 dispensing zone.

This way, the infusion temperatures and/or volumes of infusion liquid pumped to the different dispensing zones may be selected with extreme accuracy.

In order to selectively direct the infusion liquid towards the first 8 or towards the second 10 dispensing zone the machine 1 comprises deviator means 12, 14, such as a solenoid valve.

According to a preferred embodiment, the deviator means and/or the heating means are controlled by the control means 50. For example, such means 50 are inserted in a seat made frontally on the machine and, specifically, in a seat positioned above the outer casing 26.

The deviator means 12, 14 are preferably positioned downstream of the heating means 4 in relation to the transit direction of the infusion liquid. In fact, a preferred embodiment provides that the at least one solenoid valve forming the deviator means is fitted directly on the heat exchanger, for example at an exit mouth thereof.

For the embodiments also comprising a third dispensing zone 44 functionally connected to the heating means 4, the deviator means 12, 14 are advantageously suitable for directing the infusion liquid, again selectively, also towards said third zone 44.

Advantageously, when an infusion container 16 is disconnected from the machine 1, the deviator means 12, 14 channel the infusion liquid towards the second dispensing zone 10. For example, such function can be controlled by the control means 50 (which can interface with a sensor functionally connected to the infusion container) so as to prevent distraction of the user from causing injury.

The aforementioned infusion container 16 is provided detachably connected to the first dispensing zone 8 that comprises, in fluidic communication with each other, a coupling portion 18, 20 for the watertight reversible connection to the dispensing zone 8, a containment chamber 22 of the aromatic substance (for example in the form of a bag or in the form of a soluble substance), in which the infusion by means of said heated liquid takes place, and at least one dispensing aperture 24 of the infused drink.

As a result, the infusion container 16 is a removable component of the machine, for example so as to be subjected to periodic cleaning, or to be substituted in the case of damage or, as will be clarified in the following embodiments, replaced so as to customise the appearance of the machine.

According to a preferred embodiment, the infusion container 16 is at least partially transparent, so as to permit the contents of the containment chamber 22 to be perceived. For example, such container or at least a container wall 54 is at least partially composed of a transparent plastic material.

Advantageously, the infusion container 16 constitutes a portion of the outer casing 26 of the machine 1.

According to a preferred embodiment, the dispensing aperture 24 of the infused drink ends in a machine spout 52 positioned at a second spout 62 fluidically connected to the second dispensing zone 10.

As a result, since the machine defines a support base 64 for the support of a cup 66, a beaker or the like, when the latter rests on said base 64 under the spouts 52, 62, the aforesaid cup can receive a dispensed drink from each of the spouts, or from both simultaneously.

According to one advantageous embodiment, the second spout 62 is fitted to the infusion container 16. According to an alternative variant, the dispensing aperture 24 is fluidically connected to a machine spout 52 integral with the machine 1.

According to a preferred embodiment, the infusion container 16 is accessible at the front and/or side of the outer casing 26 of the machine 1.

Preferably, the infusion container 16 extends substantially vertically, for example so that the container wall 54 delimits a containment chamber 22, generally tubular.

According to an advantageous variant, the containment chamber 22 can be opened to insert therein an aromatic substance, loose or preferably in a bag.

For example, the infusion container 16 may comprise a closure lid 56 suitable to overlap at least partially at one end - for example axial - of such container, and in particular an upper portion of the container wall 54.

According to a preferred variant, the infusion container 16 comprises sealing means acting between the closure lid 56 and the infusion container 16, for example to contain an inner pressure of the containment chamber 22, or in any case to prevent the accidental exit of drink or heated liquid.

According to a preferred embodiment, the infusion container 16 comprises an input aperture 40 of the infusion liquid in the containment chamber 22, which is separated from the dispensing aperture 24 by means of a dividing wall 42 suitable for prolonging the infusion time of the aromatic substance.

In other words, the dividing wall 42 is positioned between the input aperture and the dispensing aperture so as to increase the liquid-substance contact time.

In yet other words, the dividing wall advantageously makes it possible to progressively fill the compartment which the substance to be infused is contained in.

According to a variant, at least one sealing element (not shown) such as an O-ring or a gasket is positioned between the input aperture 40 and the supply means of the infusion liquid.

Advantageously, the input aperture 40 is positioned on one side of the dividing wall 42 while, to reach the dispensing aperture 24, the infused drink must reach another side of the aforesaid wall 42 and/or a predefined level to spill over the wall 42.

According to one embodiment, the input aperture 40 is positioned below the dividing wall 42, or half way up it.

Preferably, the dividing wall 42 can be extracted from the containment chamber 22, for example to perform maintenance or cleaning operations.

Optionally, the dividing wall 42 may be provided with one or more through holes 60 so that partial flows of infused drink break off at different heights of the wall 42.

According to a particularly advantageous embodiment, when the infusion container 16 is joined to the machine 1, it constitutes a portion of the outer casing 26.

As a result, according to this variant, the infusion container 16 may be substituted/alternated with a different container, for example to vary the appearance of the machine, or to provide a different container specially shaped for a specific drink.

According to a favourite embodiment, the outer casing 26 delimits a first 28 and a second 30 visible surface separated by a seat 32 for the insertion of the infusion container 16; for example such seat 32 has a vertical orientation, so that the engagement of the container 16 in the relative seat 32 may for example take place with a movement from above to below according to the orientation shown in the drawings.

For example, the first 28 and the second 30 visible surfaces extend in directions incident to each other, in such a way that the infusion container 16 completes an angular area of the outer casing 26.

According to an advantageous variant, when said container 16 is housed in the seat 32, a container surface 34 joins the visible surfaces 28, 30 in a continuous manner so that, in such assembled configuration, the possible separation of the container from the machine is not perceived.

According to a particularly advantageous embodiment, peripherally to the insertion seat 32, axial guides 36, 38 are provided for the infusion container 16, each of said guides 36, 38 preferably forming a portion projecting from the respective visible surface 28, 30.

As a result, the axial guides 36, 38 constitute an extension of the visible surfaces 28, 30 inside the insertion seat 32.

To such purpose, the coupling portions 18, 20 may preferably be made from recessed zones of the container surface 34, so as to couple frontally with the axial guides 36, 38.

Innovatively, the machine which the present invention relates to permits with a single machine, the production and dispensing of drinks which generally require different production methods.

Advantageously, such machine comprises an infusion container made in the form of a connectable and removable accessory, therefore easy to separate from the machine as needed.

In particular, the accessory is advantageously designed to contain teabags, chamomile teabags or herbal teabags in a vertical position, the possibility of holding filters for making French coffee also being provided for.

This is made possible mainly by the fact that the accessory permits a drop infusion and an overflow exit, possible solely thanks to the substantially vertical extension of such component.

Advantageously, the machine which the present invention relates to is easy to use in that the dispensing operations are continuously controlled; in addition, the user interface makes it easy and intuitive to adjust the process parameters.

Advantageously, the infusion liquid may be infused with two or more different essences, so that even complex drinks may be made, such a coffee and milk, tea and milk, etc.

Advantageously, the presence of a plurality of dispensing mouths makes it possible to prevent cross-contamination of the drinks, as it happens for example in the traditional machines. Purely by way of example, since coffee has the effect of covering the flavour of more delicate drinks (such as chamomile tea), this could lead to an incorrect perception of the flavours characterising the various drinks.

Advantageously, the incorporation of the infusion container in the casing permits both an aesthetic advantage and, above all, a marked reduction in the overall dimensions - for example lateral- of the machine.

A person skilled in the art may make modifications and adaptations to the embodiments of the machine described above, replacing parts with others functionally equivalent so as to satisfy contingent requirements, while remaining within the sphere of the following claims.

Each of the features described as belonging to a possible embodiment may be realised independently of the other embodiments described.

## Claims

1. Machine (1) for making infused and/or soluble drinks comprising:
- at least one tank (2) suitable for containing an infusion liquid;
- heating means (4) for the infusion liquid;
- at least one pump (6) for moving the infusion liquid from the tank (2) to at least a first (8) and a second (10) dispensing zone passing through the heating means (4);
- deviator means (12, 14) for directing, in a selective manner, the infusion liquid towards the first (8) or towards the second (10) dispensing zone;
wherein an infusion container (16) is provided, detachably connected to the first dispensing zone (8) comprising, in fluidic communication with each other:
a) a coupling portion (18, 20) for the watertight reversible connection to the dispensing zone (8);
b) a containment chamber (22) of the aromatic substance, for example in the form of a bag, in which the infusion by means of said heated liquid takes place; and
c) at least one dispensing aperture (24) of the infused drink.

2. Machine according to claim 1, wherein the infusion container (16) constitutes a portion of the outer casing (26) of said machine (1).

3. Machine according to claim 1 or 2, wherein said dispensing aperture (24) of the infused drink terminates in a machine spout (52) which is positioned at a second spout (62) fluidically connected to the second dispensing zone (10), and wherein said machine defines a support base (64) to support a cup (66) such that, when said cup rests on said base under the spouts (52, 62), it can receive an infused drink from each of the spouts.

4. Machine according to the previous claim, wherein the second spout (62) is fitted to the infusion container (16).

5. Machine according to any of the previous claims, wherein the infusion container (16) is accessible at the front and/or side of an outer casing (26) of said machine (1).

6. Machine according to any of the previous claims, wherein the infusion container (16) comprises a closure lid (56) suitable to overlap at least partially at one end of said container, and comprising sealing means acting between the closure lid (56) and the infusion container (16) to contain an inner pressure of the containment chamber (22).

7. Machine according to any of the previous claims, comprising control means (50) configured to:
a) activate the pump (6) in an intermittent manner, when the infusion liquid is directed to the first dispensing zone (8), so as to ensure a sufficient infusion time for said infused drink; and/or
b) control the heating means selectively depending on whether the infusion liquid is directed towards the first (8) or towards the second (10) dispensing zone.

8. Machine according to any of the previous claims, wherein the outer casing (26) delimits a first (28) and a second (30) visible surface separated by a seat (32) for the insertion of the infusion container (16) and wherein, when said container (16) is housed in the seat (32), a container surface (34) joins said visible surfaces (28, 30) in a continuous manner, and wherein the first (28) and the second (30) visible surface extend in directions incident to each other, in such a way that the infusion container (16) completes an angular area of the outer casing (26).

9. Machine according to claim 8, wherein, peripherally to the insertion seat (32), axial guides (36, 38) are provided for the infusion container (16), said guides (36, 38) forming each a projecting portion from the respective visible surface (28, 30).

10. Machine according to any of the previous claims, wherein, when the infusion container (16) is disconnected from the machine (1), the deviator means (12, 14) channel the infusion liquid towards the second dispenser zone (10).

11. Machine according to any of the previous claims, wherein the infusion container (16) comprises an input aperture (40) of the infusion liquid in the containment chamber (22), said aperture (40) being separated from the dispenser aperture (24) by means of a dividing wall (42) suitable for prolonging the infusion time of the aromatic substance, wherein the input aperture (40) is positioned on one side of the dividing wall (42) and wherein, to reach the dispensing aperture (24), the infused drink must reach another side of said wall (42) and/or a predefined level to spill over said wall (42), said wall (42) being preferably extractable from the containment chamber (22).

12. Machine according to claim 9, wherein the dividing wall (42) is provided with one or more through holes (60) so that partial flows of infused drink break off at different heights of said wall (42).

13. Machine according to any of the previous claims, wherein, the deviator means (12, 14) are positioned downstream of the heating means (4) in relation to the transit direction of the infusion liquid.

14. Machine according to any of the previous claims, wherein an infusion group (46) is provided in the second dispensing zone (10) comprising a male infusor and a female infusor, at least one of which movable in relation to the other to open/close said infusion chamber, capsules or pods containing one or more aromatic substances being insertable in said chamber.

15. Machine according to any of the previous claims, comprising a third dispensing zone (44) functionally connected to the heating means (4), wherein the deviator means (12, 14) are suitable for directing the infusion liquid selectively also towards said third zone (44), and wherein the third dispensing zone (44) supplies a utility for making cappuccino.
